# DEMANDE DE BREVET EUROPEEN

(11) **EP 4 389 519 A1**
(43) Date de publication de la demande: **26.06.2024**
(21) Numéro de dépôt: 23217907.7
(22) Date de dépôt: 19.12.2023
(51) Int. Cl.: B60Q 1/04, B60R 13/04

(54) **MODULE D HABILLAGE AVEC MOYENS DE FIXATION AU VÉHICULE**

(30) Priorité: 19.12.2022 FR 2213837
(71) Demandeur: COMPAGNIE PLASTIC OMNIUM SE, 69007 Lyon (FR)
(72) Inventeur: ROZE, Bertrand, 01150 SAINTE-JULIE (FR)
(74) Mandataire: LLR

(57) **Abrégé**

L'invention concerne un module d'habillage (7) pour face avant (2) de véhicule automobile (1) comprenant un organe de diffusion d'ondes électromagnétiques, une surface externe (9) transparente ou translucide auxdites ondes électromagnétiques et des moyens de fixation à une structure support du véhicule.

## Description

### Domaine technique de l'invention

L'invention concerne un module d'habillage d'une face avant, une face avant pour véhicule automobile ainsi qu'un véhicule automobile comprenant une telle face avant.

### Arrière-plan technique

On connaît déjà dans l'état la technique, un véhicule automobile comprenant une face avant, cette face avant comprenant notamment un module d'habillage pouvant intégrer des fonctionnalités techniques, telles que la présence de capteurs ou d'organes de signalisation, et des fonctionnalités esthétiques, telles que des organes de diffusion de motifs lumineux. Un tel module d'habillage présente une forte valeur ajoutée, est couteux à fabriquer et fragile. L'agencement du module d'habillage dans la face avant entraine une exposition importante de celui-ci à des risques d'endommagement, par exemple lors d'un choc subi à l'avant du véhicule.

Lors d'un choc à faible vitesse ou un petit choc, tels que les chocs appelés choc « assurance », choc « parking », choc « réparabilité » ou choc « piéton », l'objectif principal est de réduire les coûts de réparation et/ou de protéger l'élément ou les éléments subissant directement ou indirectement le choc. Un choc à faible vitesse ou un petit choc sont des chocs à faible énergie cinétique, inférieure à 1 000 J. Typiquement, un choc « assurance » correspond à un choc à environ 15 km/h contre un mur fixe, tel que celui connu sous le nom de Danner ou encore AZT, ou à environ 8 km/h contre un angle de mur ou contre un poteau. Un choc « parking » est un choc survenant à moins de 8 km/h. Un choc « piéton » est un choc à environ 40 km/h également à faible énergie cinétique et limité à l'impact avec une jambe de piéton. Lors de tels chocs, et notamment lors d'un choc « piéton », l'impacteur, par exemple la jambe d'un piéton, présente souvent une hauteur suffisamment importante pour atteindre le module d'habillage présent dans la face avant.

Ainsi, il est particulièrement souhaitable de prévenir autant que possible l'endommagement du module d'habillage et plus particulièrement les composants onéreux qu'il intègre.

### Résumé de l'invention

L'invention a notamment pour but de protéger le module d'habillage et plus particulièrement les composants onéreux qu'il intègre lors d'un choc, qu'il soit subi directement par ce dernier ou indirectement, par exemple, en cas de chocs subis par un autre composant de la face avant intégrant ledit module d'habillage.

À cet effet, l'invention a pour objet un module d'habillage pour face avant de véhicule automobile comprenant un organe de diffusion d'ondes électromagnétiques et une surface externe transparente ou translucide auxdites ondes électromagnétiques, le module d'habillage comprenant des moyens de fixation à une structure support du véhicule, au moins une partie de ces moyens de fixations étant configurée pour se déformer ou se rompre lorsqu'une force appliquée sur le module d'habillage dépasse un seuil prédéterminé.

Ainsi, on obtient un module d'habillage pour face avant de véhicule automobile qui, lorsqu'il subit des efforts résultants d'un choc direct ou indirect qui dépasse une valeur seuil prédéterminée, est désolidarisé de la structure de support à laquelle il est fixé via les moyens de fixation. Dès lors, les contraintes mécaniques appliquées au module d'habillage sont drastiquement réduites ce qui permet de préserver autant que possible les composants onéreux dudit module. Ainsi, lors d'un choc subi sur la face avant qui entraine la désolidarisation entre le module d'habillage et la structure de support du véhicule, il est possible de récupérer soit le module d'habillage en entier, soit les composants encore opérationnels de celui-ci et de les réutiliser pour former un nouveau module d'habillage, ce qui réduit considérable le coût du remplacement d'un tel module. Il est par exemple possible de réutiliser des composants du module d'habillage tels que des éléments électriques (par exemple une unité optique ou l'organe de diffusion d'ondes électromagnétiques), des éléments de décor (par exemple un logo ou, à nouveau, l'organe de diffusion d'ondes électromagnétiques) ou des éléments de sécurité (par exemple des composants d'un système d'aide à la conduite présent dans le module d'habillage).

Par structure de support du véhicule, on entend tout organe du véhicule permettant un assemblage fixe du module d'habillage sur le véhicule, étant entendu que de légères modifications de position sont possibles après le montage du module d'habillage sur le véhicule de manière à ajuster finement la position du module d'habillage par rapport au reste du véhicule. Une telle structure de support peut, par exemple, être la caisse du véhicule automobile ou une face avant technique du véhicule.

Par « face avant », on entend la ou les pièces du véhicule délimitant une surface externe visible depuis l'extérieur à l'avant du véhicule. Par exemple, une face avant comprend une peau de carrosserie avant, une calandre et des unités optiques, tous visibles depuis l'extérieur à l'avant du véhicule. Ainsi, selon l'invention, une face avant de véhicule comprend un module d'habillage selon l'invention.

Par seuil prédéterminé, on entend la valeur d'efforts au-delà de laquelle les contraintes mécaniques qui s'appliquent au module d'habillage et à ses composants risquent d'engendrer des dommages irréparables. Ainsi, ce seuil varie selon les modes de réalisation, par exemple en fonction des composants compris dans le module d'habillage ou des matériaux utilisés pour la fabrication de ce module d'habillage.

L'invention peut comporter l'une ou plusieurs des caractéristiques optionnelles suivantes, prises seules ou en combinaison :

Les moyens de fixation comprennent une pluralité d'organes fusibles comprenant chacun une zone de fusibilité, lesdits organes fusibles étant configurés pour se rompre ou se déformer au niveau de leur zone de fusibilité respective.

Le module d'habillage comprend un support, les organes fusibles étant venus de matière avec ledit support.

Le module d'habillage comprend un support, les organes fusibles étant rapportés sur le support.

Les organes fusibles comprennent au moins une rainure transversale réduisant localement leur épaisseur dans leur zone de fusibilité respective.

Les organes fusibles présentent une largeur réduite dans leur zone de fusibilité respective.

Les organes fusibles comprennent au moins une perforation traversante dans leur zone de fusibilité respective.

Le support comprend au moins un réceptacle adjacent à un des organes fusibles et destiné à recevoir un organe fusible de remplacement.

Le module d'habillage comprend en outre deux unités optiques agencées respectivement au niveau de deux extrémités latérales opposées du module d'habillage.

L'invention a également pour objet une face avant pour véhicule automobile comprenant un module d'habillage tel que décrit précédemment.

L'invention a également pour objet un véhicule automobile comprenant une face avant ou un module d'habillage tels que décrits précédemment.

### Brève description des figures

L'invention sera mieux comprise à la lecture de la description qui va suivre donnée uniquement à titre d'exemple et faite en se référant aux dessins annexés dans lesquels :
[Fig. 1] est une représentation schématique en perspective d'une partie avant d'un véhicule automobile comprenant une face avant et un module d'habillage selon un premier mode de réalisation de l'invention ;
[Fig. 2] est une représentation schématique en perspective du module d'habillage du véhicule automobile de la figure 1 ;
[Fig. 3] est une représentation similaire à la figure 1 d'une partie avant d'un véhicule automobile comprenant une face avant et un module d'habillage selon un second mode de réalisation de l'invention ;
[Fig. 4] est une représentation schématique en perspective du module d'habillage du véhicule automobile de la figure 3 ;
[Fig. 5] est une représentation schématique en perspective d'un moyen de fixation d'un module d'habillage selon une première variante de réalisation applicable aux premier et deuxième modes de réalisation ;
[Fig. 6] est une représentation schématique en perspective d'un moyen de fixation d'un module d'habillage selon une deuxième variante de réalisation applicable aux premier et deuxième modes de réalisation ;
[Fig. 7] est une représentation schématique en perspective d'un moyen de fixation d'un module d'habillage selon une troisième variante de réalisation applicable aux premier et deuxième modes de réalisation ;
[Fig. 8A] est une représentation schématique en perspective du moyen de fixation du module d'habillage de la figure 4 selon une quatrième variante de réalisation applicable aux premier et deuxième modes de réalisation ;
[Fig. 8B] est une représentation schématique de la quatrième variante de réalisation dans laquelle l'organe fusible est rompu ;
[Fig. 8C] est une représentation schématique de la quatrième variante de réalisation dans laquelle un organe fusible de remplacement est inséré dans le réceptacle prévu à cet effet.

### Description détaillée

Dans la description détaillée, la direction longitudinale (ou axe X), la direction transversale (ou axe Y) et la direction verticale (ou axe Z) font références aux directions d'un véhicule automobile et sont illustrées sur les figures.

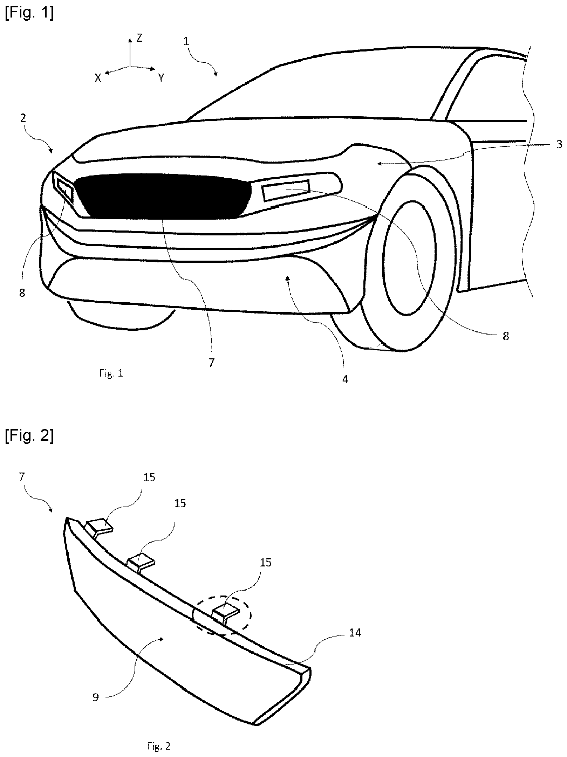

La figure 1 montre la partie avant d'un véhicule automobile 1 qui comprend une face avant 2 intégrant un module d'habillage 7 selon un premier mode de réalisation de l'invention. Selon l'invention, on entend par « face avant » la ou les pièces du véhicule 1 délimitant une surface externe visible depuis l'extérieur à l'avant du véhicule 1.

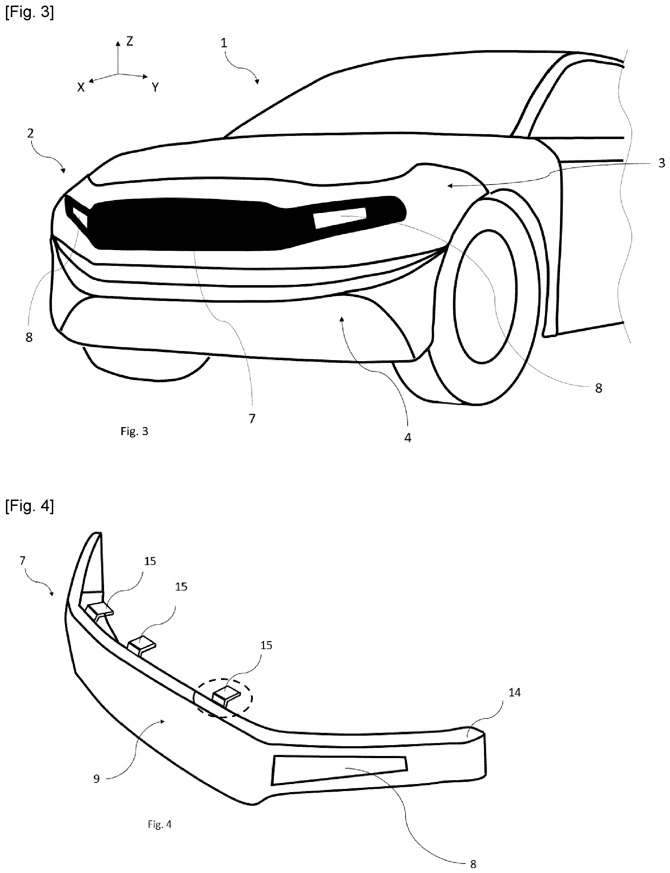

La face avant 2 comprend une portion supérieure 3 et une portion inférieure 4 (figures 1 et 3), le module d'habillage 7 étant situé dans la portion supérieure 3 de la face avant 2. Bien évidemment, en fonction des fonctionnalités ou de l'esthétisme dont on souhaite doter cette face avant 2, on peut tout à fait envisager que le module d'habillage soit situé dans la portion inférieure 4 de la face avant 2, ou que celle-ci comprennent plusieurs modules d'habillage 7 selon l'invention.

Dans le cas présent, le module d'habillage 7 présente une forme générale allongée et est configuré pour s'étendre sur plus de 50 % de la largeur de la face avant 2. Plus particulièrement, dans le cas présent, le module d'habillage 7 s'étend sur environ 90 % de la largeur - c'est-à-dire la dimension suivant l'axe transversal Y - de la face avant 2. Le module d'habillage 7 comprend un organe de diffusion d'ondes électromagnétiques (non représenté) et une surface externe 9 transparente ou translucide auxdites ondes électromagnétiques. Enfin, le module d'habillage 7 comprend des moyens de fixation à une structure support du véhicule, au moins une partie de ces moyens de fixations étant configurée pour se déformer ou se rompre lorsqu'un effort appliqué sur le module d'habillage 7 dépasse un seuil prédéterminé.

Dans le cas présent, l'organe de diffusion d'ondes électromagnétiques du module d'habillage 7 est apte à émettre des ondes électromagnétiques dans le spectre visible, communément appelées lumière par la suite. Cet organe de diffusion comprend par exemple un guide de lumière couplé à un émetteur de lumière (non représentés). Selon d'autres modes de réalisation, l'organe de diffusion d'ondes électromagnétiques est apte à émettre d'autres types d'ondes électromagnétiques, par exemple des ondes infrarouges ou des ondes radioélectriques. On peut prévoir que le module d'habillage 7 comprend plusieurs organes de diffusion d'ondes électromagnétiques, chaque organe étant apte à diffuser un ou plusieurs types d'ondes électromagnétiques.

Dans le cas présent, la surface externe 9 transparente ou translucide auxdites ondes électromagnétique du module d'habillage 7 est au moins transparente ou translucide à la lumière. Le module d'habillage 7 est ainsi apte à émettre de la lumière vers l'extérieur à travers la surface externe 9 transparente ou translucide à la lumière afin, par exemple, de transmettre un signal lumineux. Par ailleurs, cette émission de lumière peut également être utilisée pour améliorer le rendu esthétique du module d'habillage 7. Selon un mode de réalisation particulier, la surface externe peut éventuellement dévier des ondes électromagnétiques, par exemple la lumière. Il est ainsi possible d'apporter avantageusement une correction optique devant les unités optiques 8.

Le module d'habillage 7 est à la fois destiné à être fixé sur une structure support du véhicule automobile 1, par exemple sur la caisse du véhicule automobile 1 ou sur une face avant technique du véhicule 1, et destiné à se désolidariser de cette dernière ou être déformé indépendamment de cette dernière lorsqu'une force appliquée sur le module d'habillage 7 dépasse un seuil prédéterminé. Pour ce faire, le module d'habillage 7 comprend des moyens de fixation dont une partie est configurée pour se rompre ou se déformer en cas de choc engendrant des contraintes mécaniques trop importantes sur le module d'habillage 7, risquant par exemple d'endommager de manière irréparable un composant du module d'habillage 7 tel que l'organe de diffusion d'ondes électromagnétiques. Par exemple, dans le cas présent, le module d'habillage 7 comprend un support 14, par exemple un cadre de fixation, ce support 14 pouvant notamment être obtenu par moulage de matière plastique, et les moyens de fixation comprennent une pluralité d'organes fusibles 15 qui sont, dans le cas présent, répartis régulièrement latéralement sur le support 14 du module d'habillage 7. Une telle répartition permet une meilleure gestion locale des contraintes mécaniques appliquées au module d'habillage 7 et à ses composants en cas de chocs. Dans les deux modes de réalisations représentés aux figures 2 et 4 du module d'habillage 7, celui-ci comprend trois organes fusibles 15 venus de matières avec le support 14 et répartis latéralement en bordure supérieure dudit support 14. Toutefois, on peut prévoir un nombre différent et/ou une répartition différente des organes fusibles 15. Par exemple, il peut y avoir plus de trois organes fusibles 15 répartis latéralement en bordure supérieure dudit support 14, ainsi que plus de trois organes fusibles 15 répartis latéralement en bordure inférieure dudit support 14. Par ailleurs, les organes fusibles 15 (ou au moins une partie de ceux-ci) peuvent être distincts du support 14 du module d'habillage 7 et rapportés sur ce support 14. En d'autres termes, ces organes fusibles 15 distincts peuvent être assemblés postérieurement au moulage du support 14 du module d'habillage 7. Cela est avantageux en ce qu'il est possible de remplacer facilement un organe fusible déformé ou rompu après un choc.

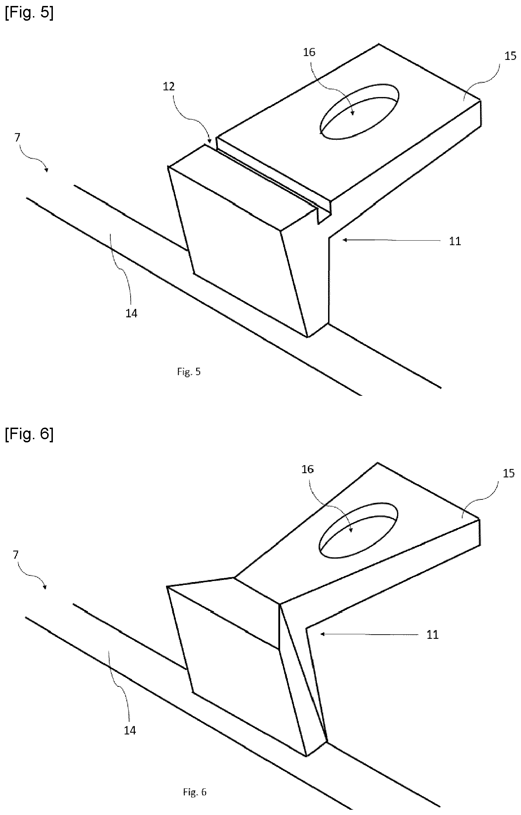

Comme représenté aux figure 5 à 8, chacun de ces organes fusibles 15 présente un orifice de fixation 16 permettant sa fixation à la structure de support du véhicule 1. Bien entendu, toute autre technique connue de l'Homme du métier permettant la fixation des organes fusibles 15 à la structure de support du véhicule 1 peut être envisagée dans le cadre de l'invention.

Dans les deux modes de réalisation représentés aux figures 2 et 4 du module d'habillage 7, les organes fusibles 15 sont identiques entre eux. Néanmoins, on peut prévoir qu'au moins un des organes fusibles 15 soit différent des autres. On peut prévoir des types d'organes fusibles 15 spécifiques en fonction des contraintes mécaniques plus ou moins importantes qui s'appliquent localement à l'endroit où l'on positionne un tel organe fusible 15.

Ces organes fusibles 15 comprennent chacun une zone de fusibilité 11 et sont configurés pour se rompre ou se déformer au niveau de leur zone de fusibilité respective lorsque la force appliquée sur le module d'habillage 7, résultant du choc subi directement ou indirectement par le module d'habillage 7, dépasse le seuil prédéterminé. Ainsi, lors d'un tel choc, les organes fusibles 15 se rompent ou se déforment, ce qui engendre un déplacement du module d'habillage 7 selon l'axe longitudinal X du véhicule. Il se retrouve donc désolidarisé de la structure de support du véhicule et, hormis les organes fusibles 15 qui sont déformés ou rompus, les composants du module d'habillage 7 sont préservés autant que possible, ce qui évite une réparation très onéreuse, notamment dans le cas de choc n'ayant pas engendré de dommage trop important.

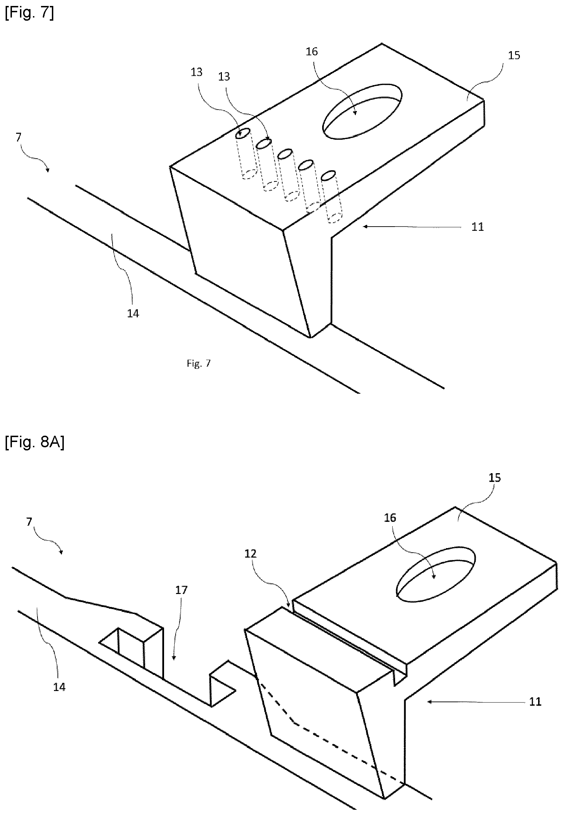

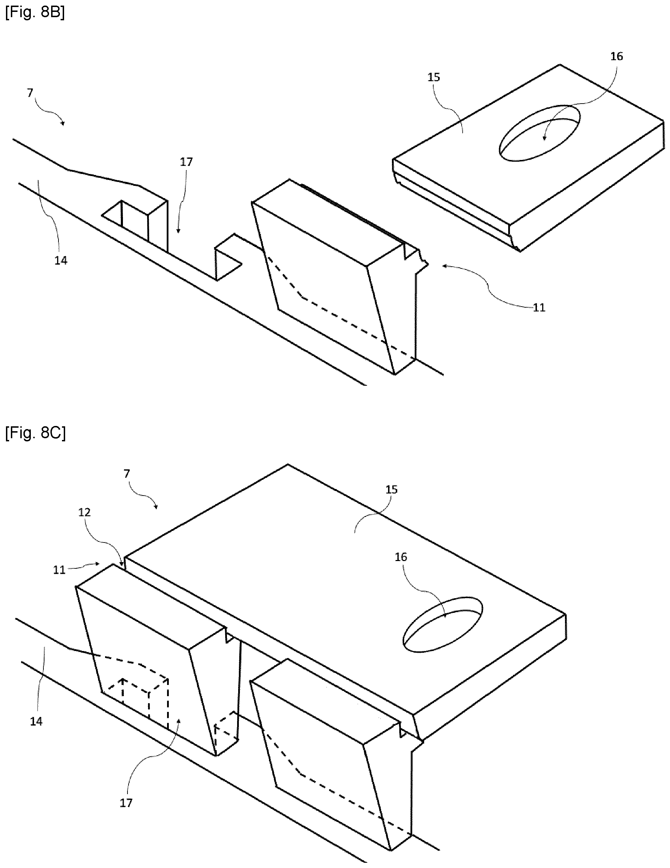

Dans le cas où les organes fusibles 15 sont venus de matière avec le support 14 on peut prévoir, par exemple, que le support 14 puisse être remplacé après un choc afin que le module d'habillage 7 soit à nouveau monté sur un véhicule 1. On peut également prévoir que le support 14 comprenne des moyens permettant de fixer de nouveaux organes fusibles 15 sur ce support 14 après que les organes fusibles 15 d'origine aient été déformés ou rompus lors d'un choc. Ces moyens consistent, par exemple, en un réceptacle 17 formant un évidement dans le support 14 dans lequel un organe fusible 15 peut être inséré et fixé par tout moyen connu (figure 8A), par exemple par emboitement, vissage, clippage, collage et/ou soudage. De préférence, chaque réceptacle 17 est situé à proximité d'un des organes fusibles 15 d'origines. On peut prévoir que l'organe fusible 15 de remplacement ait une géométrie différente de celle de l'organe fusible 15 d'origine afin de compenser le décalage entre l'emplacement de l'organe fusible 15 d'origine et le réceptacle 17. La figure 8B représente un organe fusible 15 rompu au niveau de sa rainure 12. Afin de conserver la fonction de fixation de l'organe fusible 15, un organe fusible 15 de remplacement est inséré dans le réceptacle 17 (figure 8C). On remarque que cet organe fusible 15 de remplacement présente une forme différente de celle de l'organe fusible 15 qu'il remplace. Cette forme permet de compenser le décalage latéral entre l'emplacement de l'organe fusible 15 d'origine et l'emplacement du réceptacle 17. Ainsi, l'orifice de fixation 16 à la structure support du véhicule 1 de l'organe fusible 15 de remplacement est agencé sensiblement dans la même position que l'orifice de fixation 16 de l'organe fusible 15 d'origine et peut donc remplir sa fonction de fixation. On remarque que l'organe fusible 15 de remplacement comprend également une rainure 12 et peut donc lui aussi se rompre ou de déformer dans sa zone de fusibilité 11.

Dans le cas où les organes fusibles 15 sont rapportés sur le support 14, on peut prévoir qu'il soit possible de désolidariser le support 14 et le reste de l'organe fusible 15 déformé ou rompu après un choc. Par exemple, on peut prévoir que les organes fusibles 15 soient fixés de manière amovible sur le support 14, par exemple par vissage ou par clippage. Il suffit alors de remplacer les organes fusibles 15 et de repositionner et fixer le module d'habillage 7 dans sa position d'origine, ce qui représente une réparation peu onéreuse. On peut également prévoir, additionnellement ou alternativement, que le support 14 comprenne également des réceptacles 17 de fixation d'organes fusibles 15 de remplacement afin de remplacer un organe fusible 15 déformé ou rompu après un choc.

Comme représenté à la figure 5, la zone de fusibilité 11 des organes fusibles 15 peut comprendre une rainure transversale 12 réduisant localement son épaisseur. Ainsi, on crée une zone de faiblesse mécanique configurée pour rompre en priorité. En définissant les dimensions de la rainure, par exemple en définissant la profondeur ou la largeur de la rainure, et/ou en définissant la forme de la rainure, par exemple en définissant une section de forme rectangulaire, en U ou en V, il est possible de prévoir le seuil prédéterminé de fusibilité avec une grande précision. Il est également possible de prévoir que les dimensions et/ou la forme de la rainure entraine une augmentation locale de la souplesse de l'organe fusible 15 lui permettant de se déformer lors d'un choc pour permettre un déplacement du module d'habillage 7.

Comme représenté à la figure 6, la zone de fusibilité 11 des organes fusibles 15 peut présenter une réduction locale de la largeur de sorte à créer une zone de faiblesse mécanique configurée pour rompre en priorité. On obtient ainsi de manière simple à mettre en oeuvre une zone de fusibilité 11 dont les propriétés de résistance mécanique sont adaptées pour que ladite zone de fusibilité 11 rompe en priorité en réponse à l'application d'une force supérieure au seuil prédéterminé. En définissant l'importance de la réduction locale de la largeur, il est possible de prévoir le seuil prédéterminé de fusibilité avec une grande précision. Il est également possible de prévoir que cette diminution de la largeur entraine une augmentation locale de la souplesse de l'organe fusible 15 lui permettant de se déformer lors d'un choc pour permettre un déplacement du module d'habillage 7.

Comme représenté à la figure 7, la zone de fusibilité 11 des organes fusibles 15 peut comprendre au moins des perforations traversantes 13. Dans la variante représentée, la zone de fusibilité 11 présente cinq perforations traversantes 13 ce qui permet d'adapter avec une plus grande précision les propriétés mécaniques de la zone de fusibilité 11 et, in fine, de prévoir la rupture ou la déformation de l'organe fusible 15 concerné avec une plus grande précision. Selon les modes de réalisation, on peut prévoir de modifier le nombre, les dimensions ou les positions relatives des perforations traversantes 13 afin d'adapter avec une grande précision les propriétés mécaniques de la zone de fusibilité 11.

Bien évidemment, toute option connue de l'Homme du métier permettant de prévoir la rupture ou la déformation d'un organe fusible 15 en réponse à l'application d'une force au-delà d'un seuil peut être envisagée. Il est par exemple possible de combiner entre elles les variantes de réalisation des figures 5, 6 et 7. Ainsi, on peut prévoir que le module d'habillage 7 comprend plusieurs types différents d'organes fusibles 15, choisis par exemple parmi ceux décrits pour le premier, deuxième et troisième modes de réalisation. On peut également prévoir qu'un même organe fusible 15 présente en combinaison les caractéristiques de ces trois modes de réalisation, en comprenant par exemple à la fois une rainure 12, une réduction locale de la largeur, et des perforations traversantes 12. Ces combinaisons permettent d'adapter avec une grande précision les propriétés mécaniques de la zone de fusibilité 11.

Le seuil est prédéterminé de telle sorte que l'application d'une force dont la valeur est inférieure ou égale audit seuil n'engendre pas de contraintes mécaniques sur le module d'habillage 7 et ses composants créant des dommages irréparables sur ces derniers. On peut prévoir, par exemple pour un module d'habillage 7 comprenant trois organe fusibles 15, que chaque organe fusible 15 ait un seuil de rupture ou de déformation compris entre 300 N (soit 900 N pour l'ensemble du module d'habillage 7) et 700 N (soit 2 100 N pour l'ensemble du module d'habillage 7), de préférence compris entre 400 N (soit 1 200 N pour l'ensemble du module d'habillage 7) et 600 N (soit 1 800 N pour l'ensemble du module d'habillage 7).

Dans le second mode de réalisation du module d'habillage 7 (figures 3 et 4), celui-ci comprend en outre deux unités optiques 8 agencées respectivement au niveau de deux extrémités latérales opposées du module d'habillage 7. Cette intégration des unités optiques 8 dans le module d'habillage 7 permet de faciliter le montage de la face avant 2 sur le véhicule automobile 1 et d'améliorer l'esthétisme du véhicule 1 en permettant, par exemple d'obtenir une continuité de forme entre le module d'habillage 7 et les unités optiques 8. Elle permet également une meilleure répartition des contraintes mécaniques qui s'appliquent sur l'ensemble du module d'habillage 7 puisque chacune des unités optiques est généralement fixée directement sur une structure de support du véhicule.

Avantageusement, le module d'habillage 7 est agencé de manière à ce que sa surface externe 9 soit affleurante au reste de la surface externe de la face avant 2. La surface externe 9 du module d'habillage 7 et le reste de la surface externe de la face avant 2 sont en continuité de forme afin de créer un effet donnant l'illusion que cette portion de la face avant 2 est d'un seul tenant.

### Liste de références

- 1 :: véhicule automobile
- 2 :: face avant
- 3 :: portion supérieure de la face avant
- 4 :: portion inférieure de la face avant
- 7 :: module d'habillage
- 8 :: unité optique
- 9 :: surface externe
- 11 :: zone de fusibilité
- 12 :: rainure
- 13 :: perforations traversantes
- 14 :: support
- 15 :: organes fusibles
- 16 :: orifice de fixation à la structure de support du véhicule
- 17 :: réceptacle

## Revendications

1. Module d'habillage (7) pour face avant (2) de véhicule automobile (1) **caractérisé en ce qu'**il comprend un organe de diffusion d'ondes électromagnétiques et une surface externe (9) transparente ou translucide auxdites ondes électromagnétiques, le module d'habillage (7) comprenant des moyens de fixation à une structure support du véhicule, au moins une partie de ces moyens de fixations étant configurée pour se déformer ou se rompre lorsqu'une force appliquée sur le module d'habillage (7) dépasse un seuil prédéterminé.

2. Module d'habillage (7) selon la revendication 1, dans lequel les moyens de fixation comprennent une pluralité d'organes fusibles (15) comprenant chacun une zone de fusibilité (11), lesdits organes fusibles (15) étant configurés pour se rompre ou se déformer au niveau de leur zone de fusibilité (11) respective.

3. Module d'habillage (7) selon la revendication précédente, comprenant un support (14), les organes fusibles (15) étant venus de matière avec ledit support (14).

4. Module d'habillage (7) selon la revendication 2, comprenant un support (14), les organes fusibles (15) étant rapportés sur le support (14).

5. Module d'habillage (7) selon l'une quelconque des revendications 2 à 4, dans lequel les organes fusibles (15) comprennent au moins une rainure transversale (12) réduisant localement leur épaisseur dans leur zone de fusibilité (11) respective.

6. Module d'habillage (7) selon l'une quelconque des revendications 2 à 5, dans lequel les organes fusibles (15) présentent une largeur réduite dans leur zone de fusibilité (11) respective.

7. Module d'habillage (7) selon l'une quelconque des revendications 2 à 6, dans lequel les organes fusibles (15) comprennent au moins une perforation traversante (13) dans leur zone de fusibilité (11) respective.

8. Module d'habillage (7) selon la revendication 3 ou 4 prises seules ou en combinaison avec l'une quelconque des revendications 5 à 7, dans lequel le support (14) comprend au moins un réceptacle (17) adjacent à un des organes fusibles (15) et destiné à recevoir un organe fusible (15) de remplacement.

9. Module d'habillage (7) selon l'une quelconque des revendications précédentes comprenant en outre deux unités optiques (8) agencées respectivement au niveau de deux extrémités latérales opposées du module d'habillage (7).

10. Face avant (2) pour véhicule automobile (1) **caractérisé en ce qu'**elle comprend un module d'habillage (7) selon l'une quelconque des revendications précédentes.

11. Véhicule automobile (1) **caractérisé en ce qu'**il comprend une face avant (2) selon la revendication précédente ou un module d'habillage (7) selon l'une quelconque des revendications 1 à 10.
